# DEMANDE DE BREVET EUROPEEN

(11) **EP 1 594 305 A1**
(43) Date de publication de la demande: **09.11.2005**
(21) Numéro de dépôt: 05290975.1
(22) Date de dépôt: 04.05.2005
(51) Int. Cl.: H04N 1/60

(54) **Procédé et dispositif de conversion d'espace de couleur par interpolation tridimensionnelle**

(30) Priorité: 07.05.2004 FR 0404917
(71) Demandeur: SAGEM S.A., 75512 Paris Cedex 15 (FR)
(72) Inventeur: Le Maistre, Nicolas, 77500 Chelles (FR)
(74) Mandataire: Debay, Yves

(57) **Abrégé**

La présente invention concerne un procédé de conversion d'espace de couleur par interpolation des coordonnées des points (20) représentatifs de la composition chromatique des pixels (11) d'une image (1), caractérisé, d'une part, en ce qu'il est mis en oeuvre par un circuit (10) électronique d'interpolation implémenté dans un système (100) de traitement d'image et, d'autre part, en ce qu'il comporte une étape de choix d'au moins un critère parmi au moins des critères de rapidité et de qualité, cette étape de choix résultant en la sélection d'une méthode d'interpolation polyédrique, parmi au moins trois méthodes, différant en la nature des polyèdres (25) utilisés et consistant toutes en un calcul de coefficients (22) d'interpolation permettant de déterminer les coordonnées des points (20) représentatifs de la composition chromatique des pixels (11) d'une image, d'après les coordonnées de sommets (21) de polyèdres (25) dans lesquels ces coordonnées des points (20) sont comprises.

## Description

### DOMAINE TECHNIQUE DE L'INVENTION

La présente invention s'applique aux domaines du traitement d'image et de l'électronique. L'invention s'applique plus particulièrement à la conversion d'espace de couleur d'une image, lors l'établissement de signaux représentatifs des couleurs d'une image pour permettre, par exemple, son impression par un dispositif d'impression ou son affichage par des moyens d'affichage (écrans LCD, CRT ou plasma). La présente invention concerne un procédé de conversion d'espace de couleur par interpolation tridimensionnelle des composantes chromatiques des pixels d'une image. La présente invention concerne également l'architecture du dispositif permettant la mise en oeuvre du procédé selon l'invention.

### ARRIERE-PLAN TECHNOLOGIQUE DE L'INVENTION

Une image est représentée, dans les systèmes de traitement d'image, par un ensemble de lignes successives constituées de points successifs (ou pixels). Les valeurs représentatives de l'arrangement bidimensionnel et des compositions chromatiques et/ou de luminance des pixels définissent l'image dans son intégralité. La composition chromatique d'un pixel donné d'une image peut être représentée dans différents espaces de couleur, dont les dimensions correspondent chacune à une composante chromatique et/ou de luminance. Par exemple, la composition chromatique d'un pixel peut être représentée dans un espace de couleur de type RGB (pour l'anglais « Red Green Blue », c'est-à-dire Rouge Vert Bleu) ou de type CMY (pour l'anglais « Cyan Magenta Yellow », c'est-à-dire Cyan Magenta Jaune) ou encore de type CMYK (pour l'anglais « Cyan Magenta Yellow blacK », c'est-à-dire Cyan Magenta Jaune Noir). Chaque dimension de ces espaces correspond à une composante chromatique. Il existe également des espaces de représentation des pixels, tels que l'espace LAB (pour l'anglais Luminance, A and B color channels), dans lesquels une des dimensions correspond à une composante de luminance des pixels et les autres correspondent à des composantes chromatiques. Dans les systèmes de traitement d'images électroniques, les pixels d'une image sont généralement représentés initialement par les coordonnées d'un point dans l'espace RGB. Ces coordonnées du point représentatif de la composition chromatique d'un pixel sont ensuite converties dans un espace de représentation chromatique permettant plus facilement l'impression ou l'affichage de l'image. Cette étape de conversion de l'espace de couleur permet, par exemple, l'établissement de trames d'impression ou d'affichage.

Il est connu dans l'art antérieur des procédés de conversion de l'espace de couleur dans lesquels les coordonnées du point représentatif de la composition chromatique d'un pixel, dans un espace de représentation, sont converties, dans un autre espace de représentation, grâce à l'utilisation de tables de conversion des espaces de couleur. Ces tables de conversion permettent de mettre en correspondance une pluralité de coordonnées de points dans un espace de représentation avec une pluralité de coordonnées des mêmes points dans un autre espace de représentation. Ces tables permettent par exemple de convertir les coordonnées d'un point dans un espace tridimensionnel (par exemple, RGB) en coordonnées dans un espace quadridimensionnel (par exemple, CMYK). Le nombre d'entrées de ces tables définit le nombre de points dont les coordonnées peuvent être converties et donc la précision avec laquelle la conversion peut être réalisée. Plus le nombre d'entrées de ces tables est faible, plus la nuance de composition chromatique discriminable sera faible, à cause du fait que de nombreuses compositions chromatiques différentes auront été approximées comme étant similaires et donc représentées par les mêmes entrées de la table de conversion. Ces procédés présentent les inconvénients de nécessiter des tables de conversion de dimensions très importantes ou de n'offrir qu'une précision limitée de la conversion. Ces deux inconvénients aboutissent à une dégradation de la performance de la conversion, respectivement en termes de rapidité ou de qualité.

Les signaux représentatifs, dans les systèmes de traitement d'image, des coordonnées des points représentatifs de différentes compositions chromatiques sont codées sur un certains nombres de bits. Par exemple, une composition chromatique donnée, dans un espace de représentation donné, pourra être codée sur 8 bits par composante chromatique (c'est-à-dire 8 bits par dimension de l'espace de représentation). Chaque composante chromatique (c'est-à-dire chaque dimension de l'espace de représentation) d'un pixel donné pourra donc prendre 256 valeurs. Si l'espace de représentation possède trois dimensions, il faudrait une table de conversion contenant 256³ valeurs pour pouvoir convertir chacune des coordonnées possibles dans cet espace de représentation. Une solution consiste à échantillonner les coordonnées possibles dans l'espace de représentation selon un pas d'échantillonnage, de préférence multiple de 2, de façon à réduire le nombre de coordonnées possibles. Pour un espace tridimensionnel, cette solution réalise donc une approximation des différents points représentatifs des différentes compositions chromatiques possibles. Les coordonnées d'un point sont arrondies par cette approximation. Les points sont ainsi assimilés à des cubes dans lesquels ils sont inscrits, l'ensemble de ces cubes couvrant l'intégralité de l'espace de représentation. Pour cela, il suffit par exemple de ne prendre qu'un certain nombre de bits de poids fort parmi les bits sur lesquels sont codées les coordonnées des points représentatifs des différentes compositions chromatiques. Ces bits de poids fort correspondent aux signaux représentatifs des coordonnées des cubes de l'espace de représentation et les bits de poids faible représentent les coordonnées précises des points à l'intérieur de ces cubes. L'utilisation des bits de poids fort consistant en un arrondi des valeurs des coordonnées, chaque cube sera ainsi défini par les coordonnées d'un point d'origine du cube et par les coordonnées des points d'origine des cubes adjacents. Le nombre de bits de poids fort utilisé en entrée de la table de conversion déterminera le nombre de cubes utilisés pour couvrir tout l'espace de représentation dans la table de conversion. Les nombres de bits de poids fort et de poids faible dépendent donc du pas d'échantillonnage utilisé pour établir la table de conversion d'espace de couleur. Chaque entrée de la table correspond donc aux coordonnées du point d'origine d'un cube. Chaque cube étant défini par les coordonnées de son point d'origine et des points d'origine des cubes adjacents, les 8 sommets d'un cube seront définis par 8 entrées de la table de conversion.

Il est connu dans l'art antérieur, notamment par les brevets US 5 541 742, US 5 311 332, US 5 428 465, US 5 581 376 et US 6 571 010, des procédés de conversion de l'espace de couleur dans lesquels des tables de conversion de dimensions limitées sont utilisées pour améliorer la rapidité de la conversion, la qualité étant préservée grâce à des étapes d'interpolation tridimensionnelle des coordonnées du point représentatif de la composition chromatique d'un pixel. Ces étapes d'interpolation tridimensionnelle permettent, à partir de coordonnées approximatives extraites de tables de conversion de taille limitée, de déterminer plus précisément les coordonnées du point représentatif de la composition chromatique d'un pixel dans le nouvel espace de représentation. Cette solution permet, d'une part, d'accélérer le calcul des coordonnées des points représentatifs des compositions chromatiques en utilisant des tables de conversion de taille restreintes et, d'autre part, de conserver la précision de la définition de la composition chromatique en estimant l'erreur réalisée par l'approximation due à l'utilisation de la table de conversion. Les bits de poids fort parmi les bits codant les coordonnées d'un point représentatif d'une composition chromatique d'un pixel donné sont utilisés pour déterminer dans quel cube de l'espace ce point est inscrit. Une table de conversion permet alors de convertir les coordonnées de ce cube d'un espace de représentation vers un autre. Les bits de poids faibles sont utilisés pour déterminer, par interpolation tridimensionnelle, la distance séparant ce point des 8 sommets du cube dans lequel il est inscrit. Cette interpolation tridimensionnelle utilisant les 8 sommets du cube, dans lequel est inscrit le point à interpoler, est dite tri-linéaire. Elle permet de calculer des coefficients d'interpolation à appliquer sur les coordonnées de chacun des sommets du cube, pour déterminer les coordonnées exactes du point représentatif de la composition chromatique du pixel. Les coordonnées des sommets du cube, dans le nouvel espace de représentation, sont déterminées grâce à la table de conversion. Les coefficients d'interpolation permettent alors de déterminer les coordonnées exactes du point représentatif de la composition chromatique du pixel donné, dans le nouvel espace de représentation.

Il est connu, notamment par les brevets US 6 049 400 et US 5 581 376, des procédés d'interpolation tridimensionnelle appliquée à la conversion d'espace de couleur utilisant des calculs d'interpolation tri-linéaire des coordonnées d'un point par rapport aux sommets du cube dans lequel il est inscrit. Ces procédés présentent les inconvénients de nécessiter un calcul relativement long de 8 coefficients d'interpolation du point, d'après les 8 sommets du cube dans lequel il est inscrit dans l'espace de représentation initial, puis de déterminer, d'après une table de conversion d'espace de couleur, les coordonnées de ces 8 sommets du cube dans le nouvel espace de représentation, pour multiplier ensuite chacun des 8 coefficients d'interpolation aux nouvelles coordonnées de l'un des 8 sommets du cube, dans l'espace de représentation final. La somme de ces produits permet alors de déterminer les nouvelles coordonnées du point dans le nouvel espace de représentation.

Il est connu également, notamment par les brevets US 6 049 400, US 5 581 376 et US 6 571 010, des procédés de conversion d'espace de couleur utilisant des calculs d'interpolation tétraédrique. Ces procédés consistent à diviser les cubes, définis par le pas d'échantillonnage des tables de conversion, en 6 tétraèdres, puis à déterminer dans quel tétraèdre de l'espace de représentation les coordonnées du point représentatif de la composition chromatique d'un pixel donné sont inscrites. Le calcul d'interpolation consiste alors à ne calculer que 4 coefficients d'interpolation, d'après les 4 sommets du tétraèdre ainsi déterminé. Ensuite, les coordonnées des 4 sommets de ce tétraèdre dans l'espace de représentation initial sont converties en coordonnées dans le nouvel espace de représentation. Enfin, les 4 coefficients d'interpolation sont multipliés chacun aux nouvelles coordonnées de l'un des 4 sommets des tétraèdres, pour déterminer les coordonnées exactes du point représentatif de la composition chromatique du pixel dans le nouvel espace de représentation, par sommation de ces produits. Ces calculs d'interpolation tétraédrique sont plus rapides que ceux de l'interpolation tri-linéaire mais présentent l'inconvénient d'engendrer une dégradation de la qualité de la conversion d'espace de couleur, à cause de l'erreur d'approximation réalisée sur les coordonnées du point représentatif de la composition chromatique du pixel de l'image.

Il est connu également, notamment par les brevets US 5 541 742, US 5 311 332, US 5 428 465 et US 6 571 010 des procédés de conversion d'espace de couleur utilisant des calculs d'interpolation prismatique, dans lesquels ce sont les coordonnées des 6 sommets d'un prisme dans lequel le point est inscrit qui sont utilisées. Il est connu également, notamment par le brevet US 5 926 559, des procédés de conversion d'espace de couleur utilisant des calculs d'interpolation pyramidale, dans lesquels ce sont les coordonnées des 5 sommets d'une pyramide dans laquelle le point est inscrit qui sont utilisées. Ces différents procédés permettent d'accélérer le calcul d'interpolation, mais présentent tous l'inconvénients d'engendrer une dégradation de la qualité de la conversion d'espace de couleur.

Lors de la conversion de l'espace des couleurs, un compromis doit être choisi par l'utilisateur entre la rapidité d'exécution et la qualité du résultat obtenu. Les procédés connus de l'art antérieur ne permettent pas un choix parmi toutes les méthodes de calcul d'interpolation tridimensionnelle et ne permettent donc pas d'adapter la méthode utilisée en fonction de la tâche désirée par l'utilisateur. Dans ce contexte, il est intéressant de proposer un procédé permettant de choisir entre les différentes méthodes de calcul d'interpolation tridimensionnelle connues, en fonction du choix de l'utilisateur parmi des critères de rapidité et de qualité de la conversion entre espaces de couleur. Il est également intéressant de proposer un dispositif électronique dont l'architecture permet l'implémentation de ces différentes méthodes de calcul d'interpolation tridimensionnelle et la réalisation de l'un de ces calculs en fonction du choix réalisé par l'utilisateur, parmi les critères de rapidité et de qualité.

### DESCRIPTION GENERALE DE L'INVENTION

La présente invention a pour but de pallier certains inconvénients de l'art antérieur en proposant un procédé de conversion d'espace de couleur par interpolation tridimensionnelle, selon différentes méthodes de calcul choisies par l'utilisateur en fonction de critères de qualité et de rapidité, pour permettre la conversion des points représentatifs de la composition chromatique des pixels d'une image dans un espace pluridimensionnel de représentation initial en points représentatifs de la composition chromatique des pixels de l'image dans un autre espace pluridimensionnel de représentation, dont au moins certaines dimensions correspondent à des composantes chromatiques et/ou de luminance.

Ce but est atteint par un procédé de conversion d'espace de couleur, par interpolation des coordonnées de chacun des points représentatifs de la composition chromatique des pixels d'une image, depuis un espace pluridimensionnel de représentation initial vers au moins un autre espace pluridimensionnel de représentation, dit final, dont au moins certaines dimensions correspondent à des composantes chromatiques, caractérisé, d'une part, en ce qu'il est mis en oeuvre par un circuit électronique d'interpolation implémenté dans un système de traitement d'image et, d'autre part, en ce qu'il comporte une étape de saisie de choix, par un utilisateur, grâce à des moyens de saisie du système de traitement d'image, d'au moins un critère favori parmi au moins des critères de rapidité et de qualité de la conversion d'espace de couleur, cette étape de choix résultant en la sélection d'une méthode d'interpolation tridimensionnelle, parmi au moins trois méthodes, réalisables par le circuit électronique, consistant toutes en un calcul de coefficients d'interpolation polyédrique permettant de déterminer les coordonnées des points représentatifs de la composition chromatique des pixels d'une image, d'après les coordonnées de sommets de polyèdres dans lesquels ces coordonnées des points sont comprises, la différence entre ces méthodes consistant en la nature des polyèdres utilisés.

Selon une autre particularité, les méthodes d'interpolation polyédrique réalisables par le circuit électronique sont au nombre de quatre et diffèrent par la nature des polyèdres utilisés, parmi soit des cubes, soit des tétraèdres, soit des prismes, soit des pyramides.

Selon une autre particularité, l'étape de saisie, par l'utilisateur, du choix du critère favori se traduit, dans le système de traitement d'image, par une sélection d'une valeur parmi quatre valeurs stockées dans un registre de configuration, chaque valeur correspondant à un type d'interpolation polyédrique, la sélection de l'une de ces valeurs permettant à un automate du système de traitement d'image d'envoyer des commandes de multiplexage vers des multiplexeurs du circuit électronique d'interpolation tridimensionnelle, ces commandes de multiplexage permettant au circuit électronique de réaliser le calcul, selon la méthode d'interpolation polyédrique sélectionnée, des coefficients d'interpolation et des coordonnées du point représentatif, dans l'espace de représentation final, de la composition chromatique et/ou de luminance des pixels de l'image.

Selon une autre particularité, le procédé comporte également une étape de choix par l'utilisateur, grâce à des moyens de saisie du système de traitement d'image, d'au moins un espace de représentation final parmi une pluralité d'espaces de représentation, grâce à une pluralité de tables de conversion stockées dans des moyens de mémorisation du système de traitement d'image, la consultation de chacune de ces tables permettant la détermination des coordonnées des sommets du polyèdre dans lequel se trouve le point représentatif de la composition chromatique d'un pixel donné de l'image, dans chacune des dimensions de l'espace de représentation final, à partir des coordonnées des sommets de ce polyèdre dans chacune des dimensions de l'espace de représentation initial, selon un pas d'échantillonnage des coordonnées dans les espaces initial et final, correspondant au pas d'entrée de ces tables, cette étape de choix permettant donc l'utilisation, par les moyens de calcul du système de traitement d'image, du pas d'échantillonnage et des coordonnées des sommets des polyèdres, pour le calcul des coefficients d'interpolation et des coordonnées du point représentatif du pixel dans l'espace de représentation final.

Selon une autre particularité, l'étape de consultation d'une des tables de conversion est précédée des étapes successives suivantes, réalisées par le système de traitement d'image, pour chacun des pixels de l'image :
- détermination, en fonction de la méthode de calcul d'interpolation tridimensionnelle choisie suite à l'étape de choix du critère favori par l'utilisateur, du polyèdre dans lequel se trouve le point représentatif de la composition chromatique d'un pixel de l'image, dans l'espace de représentation initial , par sélection d'un certain nombre de bits de poids fort parmi les signaux représentatifs des coordonnées de ce point, en fonction du pas d'échantillonnage qui correspond au pas d'entrée de la table de conversion, puis, lorsque le polyèdre n'est pas un cube, par comparaison des valeurs des bits de poids faible parmi ces signaux, entre les différentes dimensions de l'espace de représentation initial, grâce à un comparateur implémenté dans le système de traitement d'image;
- détermination des coordonnées des sommets du polyèdre dans lequel se trouvent les coordonnées du point représentatif de la composition chromatique de ce pixel de l'image, dans chacune des dimensions de l'espace de représentation initial ;
- calcul, grâce au circuit électronique d'interpolation polyédrique, des coefficients d'interpolation à multiplier, chacun aux coordonnées de l'un des sommets de ce polyèdre, dans chacune des dimensions de l'espace de représentation initial, pour déterminer les coordonnées du point représentatif de la composition chromatique de ce pixel de l'image, par sommation de ces produits, puis par division de cette somme, soit par le pas d'échantillonnage au cube lorsque le polyèdre utilisé est un cube, soit par le pas d'échantillonnage au carré lorsque le polyèdre utilisé est un prisme ou une pyramide, soit par le pas d'échantillonnage lorsque le polyèdre utilisé est un tétraèdre.

Selon une autre particularité, l'étape de consultation d'une des tables de conversion résulte en la détermination des coordonnées, dans chacune des dimensions de l'espace de représentation final, des sommets du polyèdre correspondant aux coordonnées des sommets du polyèdre dans lequel sont comprises les coordonnées du point représentatif de la composition chromatique d'un pixel de l'image dans l'espace de représentation initial, cette détermination permettant ensuite le calcul des coordonnées du point représentatif de la composition chromatique du pixel dans l'espace de représentation final.

Selon une autre particularité, l'étape de détermination du polyèdre dans lequel se trouvent les coordonnées du point représentatif de la composition chromatique d'un pixel de l'image, réalisée en fonction de la méthode de calcul d'interpolation tridimensionnelle choisie, lorsque le polyèdre n'est pas un cube, par comparaison des valeurs des bits de poids faible parmi ces signaux, dans chacune des dimensions de l'espace de représentation initial, permet de définir dans quel polyèdre sont comprises les coordonnées de ce point, parmi la pluralité de polyèdres possibles pour un même type d'interpolation polyédrique donné et, par conséquent, de définir les commandes de multiplexage à envoyer par l'automate vers les multiplexeurs du circuit électronique d'interpolation, pour calculer les coefficients d'interpolation et les coordonnées du point représentatif du pixel en cours de traitement, dans l'espace de représentation final.

Un second but de l'invention est de proposer un circuit électronique dont l'architecture permet la réalisation des différentes méthodes de calcul d'interpolation polyédrique, pour la mise en oeuvre du procédé selon l'invention.

Ce but est atteint par un circuit électronique d'interpolation polyédrique permettant une conversion d'espace de couleur, caractérisé en ce qu'il comporte des multiplexeurs, dont les commandes de multiplexage sont déterminées en fonction de signaux provenant d'un automate commandé par un registre de configuration, l'agencement de ces multiplexeurs permettant, en fonction des commandes de multiplexage envoyée par l'automate, l'exécution, grâce à des calculs de coefficients d'interpolation, d'au moins une méthode de calcul d'interpolation polyédrique choisie parmi trois méthodes différentes réalisables par le circuit électronique configurable de façon évolutive par l'automate.

Selon une autre particularité, le circuit comporte des entrées recevant, du système de traitement d'image, des signaux représentatifs de coordonnées de points représentatifs de compositions chromatiques de pixels d'une image, les calculs réalisés par le circuit sur ces entrées permettant, en fonction des commandes de multiplexage, une conversion d'espace de couleur, grâce à l'élaboration de signaux représentatifs de coordonnées de points représentatifs de compositions chromatiques de pixels d'une image, dans un espace pluridimensionnel de représentation final, à partir des signaux représentatifs des coordonnées de ces points dans un espace pluridimensionnel de représentation initial et des signaux représentatifs des coefficients d'interpolation calculés.

Selon une autre particularité, l'architecture du circuit électronique permet la conversion des coordonnées d'un point représentatif de la composition chromatique d'un pixel donné d'une image, depuis un espace tridimensionnel de représentation initial vers un espace quadridimensionnel de représentation final, selon une parmi quatre méthodes d'interpolation polyédrique différant par la nature des polyèdres utilisés, parmi soit des cubes, soit des prismes, soit des pyramides, soit des tétraèdres, les coordonnées des sommets de ces polyèdres étant déterminées selon un pas d'échantillonnage des coordonnées du point représentatif de la composition chromatique du pixel de l'image, ce pas d'échantillonnage correspondant au pas d'entrée d'au moins une table de conversion des coordonnées de sommets de polyèdres dans un espace de représentation initial en coordonnées de sommets de polyèdres dans un espace de représentation final.

Selon une autre particularité, le circuit électronique d'interpolation comporte un premier bloc, dit de calcul de coefficients d'interpolation, composé de soustracteurs, de multiplieurs, de registres et de multiplexeurs, ces multiplexeurs recevant des commandes de multiplexage de l'automate associé au circuit d'interpolation, qui contrôle ainsi la séquence des opérations et des calculs réalisés pour déterminer les coefficients d'interpolation des sommets successivement en cours de traitement.

Selon une autre particularité, le bloc de calcul de coefficient d'interpolation, permet, sous le contrôle des commandes de multiplexage envoyées aux multiplexeurs par l'automate, de calculer les coefficients d'interpolation par soustraction et/ou multiplication entre eux des signaux représentatifs des coordonnées du point représentatif de la composition chromatique du pixel en cours de traitement dans les dimensions de l'espace de représentation initial nécessaires à la méthode d'interpolation sélectionnée et/ou des signaux représentatifs du pas d'échantillonnage de ces coordonnées, les coefficients d'interpolation ainsi calculés étant ensuite stockés dans un registre de stockage des coefficients d'interpolation du circuit d'interpolation.

Selon une autre particularité, le circuit électronique d'interpolation comporte un second bloc, dit de conversion d'espace de couleur, composé, de multiplieurs, d'additionneurs, de diviseurs, de registres et de multiplexeurs, ce bloc recevant en entrée, d'une part, les coefficients d'interpolation stockés dans le registre de stockage des coefficients d'interpolation du circuit d'interpolation et, d'autre part, les signaux représentatifs, dans l'espace de représentation final, des coordonnées des sommets du polyèdre correspondant, d'après la table de conversion, au polyèdre dans lequel sont comprises, dans l'espace de représentation initial, les coordonnées du point représentatif de la composition chromatique du pixel en cours de traitement.

Selon une autre particularité, bloc de conversion d'espace de couleur du circuit électronique d'interpolation permet, sous le contrôle des commandes de multiplexage envoyées aux multiplexeurs par l'automate, de calculer, dans chacune des dimensions de l'espace de représentation final, les coordonnées du point représentatif de la composition chromatique du pixel en cours de traitement par calcul de la somme des produits de chacun des coefficients d'interpolation avec les coordonnées de l'un des sommets du polyèdre correspondant, d'après la table de conversion, dans l'espace de représentation final, au polyèdre sélectionné dans l'espace de représentation initial, puis par division de cette somme, soit par le pas d'échantillonnage au cube lorsque le polyèdre utilisé est un cube, soit par le pas d'échantillonnage au carré lorsque le polyèdre utilisé est un prisme ou une pyramide, soit par le pas d'échantillonnage lorsque le polyèdre utilisé est un tétraèdre.

Un troisième but de l'invention est de proposer un système de traitement d'image permettant la mise en oeuvre du procédé selon l'invention.

Ce but est atteint par un système de traitement d'image permettant la conversion d'espace de couleur selon différentes méthodes de calcul d'interpolation polyédrique, comportant des moyens de calcul et des moyens d'acquisition de signaux représentatifs d'une image, caractérisé, d'une part, en ce qu'il comporte un circuit électronique d'interpolation comportant des multiplexeurs commandés par un automate, dont les commandes de multiplexage sont déterminées, en fonction de signaux provenant d'un registre de configuration du système de traitement d'image, pour permettre la réalisation d'au moins trois méthodes de calcul d'interpolation polyédrique par des calculs de coefficients d'interpolation et, d'autre part, en ce qu'il comporte des moyens de mémorisation dans lesquels est stockée au moins une table de conversion mettant en correspondance des coordonnées de sommets de polyèdres, dans un espace pluridimensionnel initial de représentation de la composition chromatique des pixels d'une image, avec des coordonnées de sommets de polyèdres, dans un espace pluridimensionnel final de représentation de la composition chromatique des pixels d'une image, selon un pas d'échantillonnage des coordonnées qui correspond au pas d'entrée dans la table et qui est utilisé pour la détermination des coordonnées des sommets des polyèdres et pour le calcul des coefficients d'interpolation.

Selon une autre particularité, le système comporte des moyens de saisie permettant à l'utilisateur de saisir un choix d'un critère favori parmi au moins des critères de qualité et de rapidité, la sélection de ce critère favori résultant en la sélection d'une valeur des signaux du registre de configuration du système déterminant les commandes de multiplexage envoyées par l'automate vers les multiplexeurs du circuit électronique d'interpolation polyédrique, ce choix déterminant la nature des polyèdres utilisés dans le calcul d'interpolation polyédrique, les moyens de calcul du système de traitement d'image permettant la détermination des coordonnées des sommets du polyèdre dans lequel sont comprises les coordonnées du point représentatif de la composition chromatique d'un pixel donné de l'image, dans l'espace pluridimensionnel de représentation initial.

Selon une autre particularité, les moyens de saisie permettent également la saisie d'un choix d'un espace pluridimensionnel de représentation final de la composition chromatique des pixels de l'image, cette saisie permettant le choix de l'utilisation de l'une des tables de conversion d'espace de couleur stockées dans les moyens de mémorisation du système de traitement d'image.

Selon une autre particularité, les moyens de mémorisation du système permettent le stockage de signaux représentatifs de la composition chromatique des pixels de l'image, dans un espace pluridimensionnel de représentation, ces signaux étant acquis grâce aux moyens d'acquisition de signaux représentatifs d'une image et utilisés en entrée du circuit intégré d'interpolation polyédrique et en entrée de la table de conversion d'espace de couleur choisie, pour permettre le calcul de coordonnées de points représentatifs de la composition chromatique d'un pixel donné de l'image par sommation du produit des coefficients d'interpolation, chacun avec les coordonnées de l'un des sommets du polyèdre, dans un espace pluridimensionnel de représentation initial, puis dans un espace pluridimensionnel de représentation final.

### BREVE DESCRIPTION DES DESSINS

D'autres particularités et avantages de la présente invention apparaîtront plus clairement à la lecture de la description ci-après, faite en référence aux dessins annexés, dans lesquels :
- la figure 1 représente un schéma de l'algorithme itéré pour chaque pixel d'une image lors de la mise en oeuvre du procédé selon l'invention de conversion d'espace de couleur par interpolation polyédrique,
- les figures 2A à 2D représentent les différents polyèdres utilisables dans le procédé selon l'invention, correspondant respectivement à un cube, deux prismes, trois pyramides ou six tétraèdres,
- la figure 3 représente un schéma du système de traitement d'image permettant la mise en oeuvre du procédé selon l'invention.

### DESCRIPTION DES MODES DE REALISATION PREFERES DE L'INVENTION

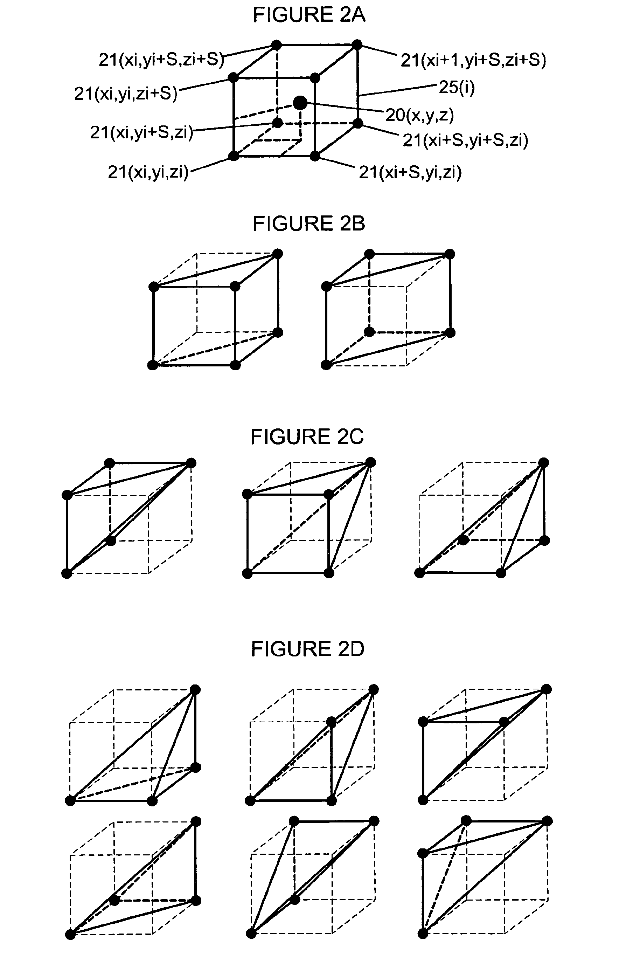

La présente invention de procédé, circuit et système de conversion d'espace de couleur par interpolation polyédrique consiste en une conversion des coordonnées des points représentatifs de la composition chromatique des pixels (11) successifs d'une image (1) en cours de traitement, depuis un espace (2) pluridimensionnel de représentation initial vers un espace (3) de représentation pluridimensionnel final, grâce à un circuit (10) électronique implémenté dans un système (100) de traitement d'image permettant la mise en oeuvre des étapes du procédé selon l'invention. Pour réaliser la conversion d'espace de couleur, l'utilisateur peut souhaiter choisir l'espace (3) de représentation final, afin de permettre l'envoi des signaux représentatifs de l'image (1) ainsi convertie vers différents dispositifs d'affichage ou d'impression. Le procédé selon l'invention comporte une étape de saisie d'un choix de l'espace (3) de représentation final, grâce à des moyens (15) de saisie du système (100) de traitement d'image. Cette étape de choix de l'espace (3) de représentation final résultera en l'utilisation de l'une des tables (4) de conversion d'espace de couleur stockées dans les moyens (40) de mémorisation du système (100) de traitement d'image. Ces tables (4) permettent chacune la conversion d'un certain nombre de coordonnées de points depuis un espace de représentation initial vers un espace de représentation final, selon un pas d'échantillonnage (S) des coordonnées de ces points. Ces pas d'échantillonnage (S) définissent le nombre d'entrées des tables (4) de conversion et la précision des conversions qu'elles permettent. L'échantillonnage des coordonnées des points, selon ce pas (ou « step » en anglais) correspond à une approximation de ces coordonnées. Cette approximation est réalisée en n'utilisant qu'un certain nombre de bits de poids fort parmi les signaux représentatifs des coordonnées des points (20) représentatifs des pixels (11) en cours de traitement. Le procédé comporte également une étape de saisie de choix du critère favori parmi plusieurs critères de rapidité et de qualité du traitement de l'image (1). En fonction de la qualité et de la rapidité souhaitées par l'utilisateur, celui-ci pourra choisir le traitement à réaliser par le système (100). Cette étape de saisie, par l'utilisateur, du choix du critère favori, grâce aux moyens (15) de saisie du système (100) de traitement d'image, se traduit par la sélection d'une des différentes méthodes d'interpolation polyédrique réalisables par le circuit (10) électronique du système (100) de traitement d'image. Dans un mode de réalisation de l'invention, ces méthodes d'interpolation polyédrique réalisables par le circuit (10) électronique sont au nombre de quatre et diffèrent par la nature des polyèdres (25) utilisés, parmi soit des cubes, soit des tétraèdres, soit des prismes, soit des pyramides. Les figures 2A à 2D représentent les différents polyèdres utilisés par les différentes méthodes d'interpolation réalisables par le circuit (10). La figure 2A représente un cube (25) d'indice i, dans lequel les coordonnées (x, y, z) du point (20) représentatif de la composition chromatique du pixel (11) en cours de traitement sont comprises. L'utilisation de seulement un certain nombre de bits de poids fort, parmi les signaux représentatifs des coordonnées (x, y, z) du point (20), aboutit aux coordonnées (xi, yi, zi) du point d'origine de ce cube (25) d'indice i. Le pas d'échantillonnage (S) des coordonnées (x, y, z) des points (20) résulte en l'approximation de ces coordonnées (x, y, z) aux coordonnées (xi, yi, zi) du point d'origine de ce cube (25) d'indice i. Les autres sommets (21) de ce cube (25) d'indice i ont des coordonnées définies selon le pas d'échantillonnage (S), dans chacune des dimensions de l'espace de représentation. Par exemple, le cube d'indice i+1 selon l'axe des abscisses aura comme point d'origine un sommet (21) d'abscisse x (i+1), égal à xi + S. Le pas d'échantillonnage (S), utilisé ici pour déterminer les coordonnées des sommets (21) du polyèdre dans lequel les coordonnées du point à interpoler sont comprises, dépend du pas d'échantillonnage qui avait été utilisé pour la création des tables (4) de conversion avant leur stockage dans les moyens (40) de mémorisation. Les tables (4) de conversion, utilisant ce pas d'échantillonnage (S) comme pas d'entrée dans la table, permettent la conversion des coordonnées de chacun de ces sommets (21) depuis l'espace (2) de représentation initial vers les coordonnées des sommets (31) correspondants dans l'espace (3) de représentation final. Par exemple, le sommet (21) de coordonnées (xi+S, yi, zi) correspond, dans la table (4) de conversion, à l'entrée d'indice i+1 selon l'axe des abscisses et d'indice i selon les deux autres axes. Suite à la sélection d'une des méthodes d'interpolation polyédrique, un type de polyèdre (25) sera utilisé pour la conversion. Selon la méthode choisie, des moyens de calcul du système (100) de traitement d'image permettent de déterminer dans quel polyèdre se trouvent les coordonnées (x, y, z), parmi l'un des polyèdres correspondant à la méthode d'interpolation choisie. Par exemple, lorsque l'utilisateur aura préféré la qualité, l'interpolation utilisera des cubes (figure 2A) et la simple utilisation des bits de poids fort parmi les signaux représentatifs des coordonnées du point (20) suffira à déterminer dans quel cube se trouve le point (20), puisque chaque cube est défini par son point d'origine de coordonnées (xi, yi, zi). Lorsque l'utilisateur aura préféré la rapidité parmi les critères de qualité et de rapidité, le procédé pourra utiliser la méthode d'interpolation tétraédrique et les moyens de calcul du système (100) détermineront dans lequel des six tétraèdres de la figure 2D se trouvent les coordonnées (x, y, z) du point (20) représentatif de la composition chromatique du pixel (11) en cours de traitement. Lorsque le polyèdre (25) utilisé n'est pas un cube, les moyens de calcul du système (100) réalise une comparaison entre les coordonnées (x, y, z) du point (20) dans chacune des dimensions. Pour cela, les bits de poids faible, parmi les signaux représentatifs des coordonnées du point (20) dans l'espace (2) de représentation, sont utilisés. Par exemple, si x ≥ y ≥ z, alors le point (20) est inscrit dans le premier tétraèdre de la figure 2D. Les différentes relations d'inégalité entre les coordonnées (x, y, z) des points (20) et la correspondance avec les polyèdres dans lesquels ils sont inscrits, sont données dans le tableau en annexe. Dans ce tableau en annexe figurent également les coordonnées des différents sommets (21) de chacun des polyèdres (25), ainsi que les coefficients (22) d'interpolation correspondant à chaque sommet (21). Le point (20) de coordonnées (x, y, z) sera alors interpolé d'après les coordonnées des sommets (21) du polyèdre (25) dans lequel ses coordonnées (x, y, z) sont comprises, en fonction de la méthode d'interpolation choisie. Ces coordonnées (x, y, z) du point (20) correspondent à la somme des produits des coordonnées des sommets (21) du polyèdre (25) dans lequel il est inscrit avec chacun un coefficient (22) d'interpolation, en fonction de la méthode d'interpolation choisie. Dans le cas de l'utilisation de cubes, les 8 sommets (21) du cube sont tous multipliés par un coefficient (22) d'interpolation et les coordonnées (x, y, z) du point (20) correspondent à la somme de ces 8 produits.

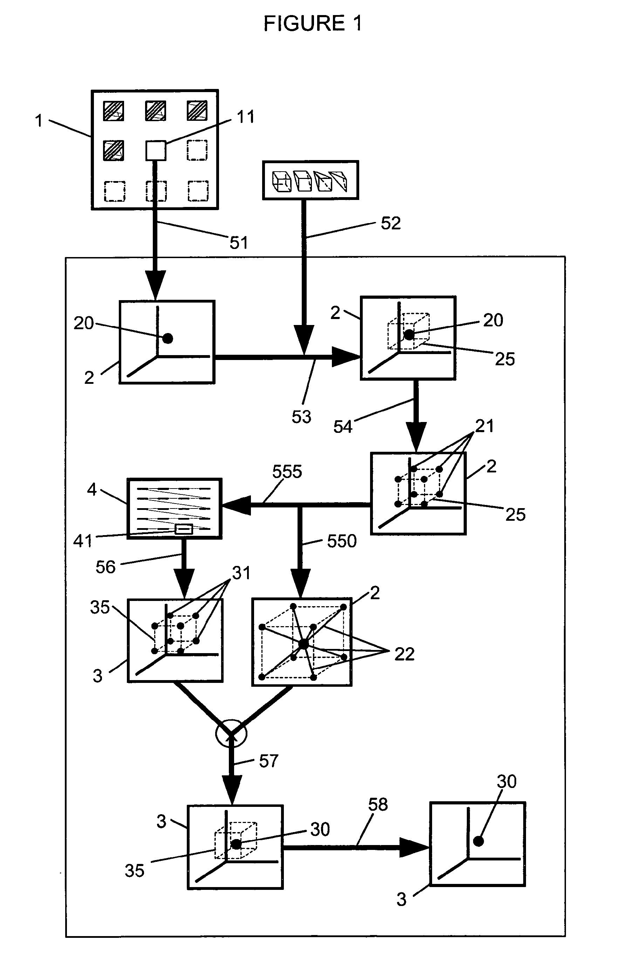

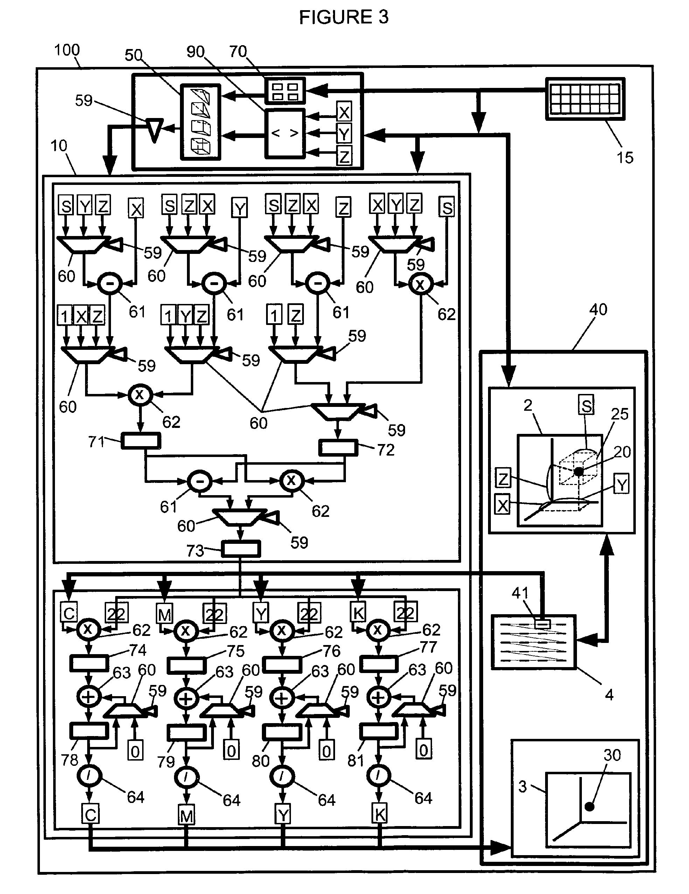

Lors du traitement d'une image (1) par le système (100) de traitement d'image, le procédé selon l'invention met en oeuvre les étapes représentées sur la figure 1, itérées pour chacun des pixels successifs de l'image (1). Une fois les signaux représentatifs d'une image acquis grâce à des moyens d'acquisition d'image du système (100) de traitement d'image, ils sont stockés dans les moyens (40) de mémorisation du système (100). Pour réaliser le traitement des pixels successifs de l'image, le système accède successivement aux signaux représentatifs des pixels de l'image. Le procédé démarre donc par un accès (51) aux signaux représentatifs du pixel (11) en cours de traitement. Ces signaux peuvent être représentés par un point (20) dont les coordonnées sont représentatives de la composition chromatique du pixel (11) en cours de traitement dans un espace (2) de représentation initial. Les moyens (15) de saisie du système (100) permettent à l'utilisateur de choisir l'espace de représentation final désiré et la qualité ou la rapidité avec laquelle il veut que le procédé se déroule. La sélection par l'utilisateur du critère favori parmi les critères de rapidité et de qualité se traduit dans le système (100), par une sélection d'une valeur parmi quatre valeurs stockées dans un registre (70, figure 3) de configuration, chaque valeur correspondant à un type d'interpolation polyédrique. La sélection de l'une des valeurs du registre (70) de configuration permet à un automate (50) du système (100) de traitement d'image d'envoyer des commandes (59) de multiplexage vers des multiplexeurs (60) du circuit (10) électronique d'interpolation tridimensionnelle. Ces commandes (59) de multiplexage permettent au circuit (10) électronique de réaliser une des méthodes d'interpolation polyédrique. Cette étape consiste donc en une sélection (52) d'un type de polyèdre (25) à utiliser parmi des cubes, des prismes, des pyramides ou des tétraèdres. Les moyens de calcul du système (100) permettent alors la détermination (53) du polyèdre (25) dans lequel se trouve le point (20) représentatif de la composition chromatique du pixel (11) dans l'espace (2) de représentation initial. La sélection de bits de poids fort parmi les signaux représentatifs des coordonnées de ce point (20), en fonction du pas d'échantillonnage (S), permet de déterminer le sommet (21) d'origine du cube (25) d'indice i dans lequel ce point (20) est inscrit. Puis, lorsque le polyèdre (25) choisi n'est pas un cube, la comparaison des valeurs des bits de poids faible parmi les signaux représentatifs des coordonnées de ce point (20), dans chacune des dimensions de l'espace (2) de représentation initial permettent de sélectionner dans quel polyèdre (25) ce point (20) est inscrit. Les moyens de calcul permettent alors la détermination (54) des coordonnées des sommets (21) du polyèdre (25) sélectionné. Ces coordonnées des sommets (21) du polyèdre (25) sélectionné permettent, d'une part, le calcul (550), par le circuit (10) électronique d'interpolation, des coefficients (22) d'interpolation permettant de définir les coordonnées (x, y, z) du point (20). Les coordonnées des sommets (21) du polyèdre (25) sélectionné permettent, d'autre part, la consultation (555) d'une table (4) de conversion, selon l'espace (3) de représentation final choisi. Cette table (4) de conversion, stockée dans les moyens (40) de mémorisation du système (100) permet, d'après l'indice (41) d'entrée dans la table du polyèdre (25) sélectionné, la détermination (56) des coordonnées des sommets (31) du polyèdre (35) correspondants, dans l'espace (3) de représentation final, aux sommets (21) du polyèdre (25) sélectionné dans l'espace (2) de représentation initial. Le circuit (10) électronique d'interpolation réalise ensuite la multiplication (57) des coordonnées de chacun de ces sommets (31) avec le coefficient (22) d'interpolation correspondant à ce sommet selon la méthode d'interpolation sélectionnée, puis la somme (58) de ces produits. Cette somme est ensuite divisée soit par le pas d'échantillonnage (S) au cube lorsque le polyèdre (25) utilisé est un cube, soit par le pas d'échantillonnage (S) au carré lorsque le polyèdre (25) utilisé est un prisme ou une pyramide, soit par le pas d'échantillonnage (S) lorsque le polyèdre (25) utilisé est un tétraèdre. Cette division de la somme des produits permet de déterminer les coordonnées du point (30) représentatif, dans l'espace (3) de représentation final, de la composition chromatique du pixel (11) en cours de traitement. Les signaux, représentatifs de la composition chromatique du pixel (11), ainsi convertis peuvent alors être stockés provisoirement dans une mémoire, par exemple dans les moyens (40) de mémorisation du système (100), en vue d'un traitement supplémentaire par un autre dispositif ou bien être directement transmis vers un dispositif de traitement, d'affichage ou d'impression. Les signaux représentatifs du pixel suivant de l'image (1) seront alors également traités selon les étapes énoncées ci-dessus.

Le procédé selon l'invention est mis en oeuvre par un système (100) de traitement d'image dans lequel est implémenté un circuit (10) électronique d'interpolation selon l'invention. Ce circuit (10) permet la mise en oeuvre de quatre méthodes différentes d'interpolation, par utilisation soit de cubes, soit de prismes, soit de pyramides, soit de tétraèdres. L'utilisation de l'une des quatre méthodes est réalisé grâce aux commandes (59) de multiplexage envoyées par l'automate (50) du système (100) en fonction de la sélection d'une des valeurs du registre (70) de configuration, suite à la saisie du choix du critère favori par l'utilisateur parmi des critères de qualité et de rapidité du traitement, grâce aux moyens (15) de saisie du système (100). Lorsque la méthode choisie n'utilise pas de cubes mais un autre type de polyèdre, la comparaison entre elles des coordonnées du point (20) représentatif de la composition chromatique du pixel (11) en cours de traitement, dans chacune des dimensions de l'espace (2) de représentation initial, permet de déterminer dans quel polyèdre ces coordonnées sont comprises, parmi la pluralité de polyèdres possibles pour un même type d'interpolation polyédrique donné. Parmi les signaux représentatifs des coordonnées du point (20), un comparateur (90) implémenté dans le système (100) de traitement d'image, utilise uniquement les valeurs des bits de poids faible, entre les différentes dimensions (x, y et z) de l'espace (2) de représentation initial, pour déterminer le polyèdre (25) dans lequel ces coordonnées sont comprises. En fonction de la valeur sélectionnée dans le registre (70) de configuration et du polyèdre (25) déterminé par le comparateur (90), l'automate (50) envoie des commandes (59) de multiplexage vers les multiplexeurs (60) du circuit (10) électronique d'interpolation, pour calculer les coefficients (22) d'interpolation. Ce calcul des coefficients (22) d'interpolation est réalisé grâce au fait que les entrées des multiplexeurs (60) reçoivent la valeur du pas d'échantillonnage (S) utilisé dans les tables (4) de conversion stockées dans les moyens (40) de mémorisation et/ou les valeurs de certaines des coordonnées (x, y, z) du point (20). Les commandes (59) de multiplexage envoyées par l'automate (50) vont permettre de contrôler l'utilisation des différentes entrées des multiplexeurs (60) et aiguiller le traitement réalisé par le circuit (10) vers le calcul (550) des coefficients (22) d'interpolation correspondants à la méthode d'interpolation choisie. Le système (100) de traitement d'image, représenté sur la figure 3, comporte des moyens de calcul (non représentés) permettant la détermination des coordonnées des sommets (21) du polyèdre (25) dans lequel sont comprises les coordonnées du point (20) représentatif de la composition chromatique du pixel (11) de l'image (1), dans l'espace (2) pluridimensionnel de représentation initial. Les moyens d'acquisition de signaux représentatifs d'une image ne sont pas représentés non plus sur la figure 3 car ils ne caractérisent pas le système selon l'invention. Le système (100) comporte des moyens (40) de mémorisation dans lesquels est stockée au moins une table (4) de conversion mettant en correspondance des coordonnées de sommets (21) de polyèdres (25), dans un espace (2) pluridimensionnel initial de représentation de la composition chromatique des pixels d'une image (1), avec des coordonnées de sommets (31) de polyèdres (35), dans un espace (3) pluridimensionnel final de représentation de la composition chromatique des pixels de l'image (1), selon le pas d'échantillonnage (S) des coordonnées. Les moyens (15) de saisie permettent à l'utilisateur de choisir l'espace (3) de représentation final qu'il souhaite obtenir et donc la table (4) de conversion qui doit être utilisée.

Le circuit (10) d'interpolation selon l'invention comporte des multiplexeurs (60), des soustracteurs (61), des multiplicateurs (62), des additionneurs (63), des diviseurs (64) et des registres (71 à 81) de stockage provisoire. L'architecture du circuit (10) d'interpolation permet les différents calculs des coefficients (22) d'interpolation correspondants aux différentes méthodes d'interpolation polyédrique. Ce circuit (10) comporte un bloc de calcul de coefficients d'interpolation, qui permet, en fonction des valeurs sélectionnées du registre (70) de configuration, d'obtenir des signaux représentatifs des coefficients (22) d'interpolation correspondant aux sommets (21) du polyèdre (25) sélectionné, d'après le pas d'échantillonnage (S) utilisé dans les tables (4) et d'après les coordonnées de ces sommets (21) et du point (20) représentatif de la composition chromatique du pixel (11) en cours de traitement, dans l'espace (2) de représentation initial. Ce circuit (10) comporte également un bloc de conversion d'espace de couleur, qui permet de calculer les coordonnées du point (30) représentatif de la composition chromatique du pixel (11) en cours de traitement, dans l'espace (3) de représentation final, d'après les coefficients (22) d'interpolation et les coordonnées, issues de la table (4) de conversion, des sommets (31) du polyèdre (35) correspondant, dans l'espace (3) de représentation final, au polyèdre (25) sélectionné dans l'espace (2) de représentation initial.

Les entrées des multiplexeurs (60) du bloc de calcul des coefficients d'interpolation du circuit (10) d'interpolation reçoivent, des moyens (40) de mémorisation du système (100) de traitement d'image, d'une part, au moins un certain nombre de bits de poids faibles parmi les signaux représentatifs de coordonnées (x, y, z) du point (20) représentatif de la composition chromatique du pixel (11) en cours de traitement et, d'autre part, des signaux représentatifs du pas d'échantillonnage (S) de ces coordonnées. Ce premier bloc est constitué d'une première rangée de quatre multiplexeurs (60) à trois entrées chacun. Trois de ces quatre multiplexeurs reçoivent sur leurs entrées, des signaux représentatifs du pas d'échantillonnage (S) et des coordonnées du point (20) dans deux dimensions de l'espace (2) de représentation (soit y et z pour le premier multiplexeur, soit x et z pour les deux autres multiplexeurs). Le quatrième multiplexeur de cette première rangée reçoit sur ses entrées les signaux représentatifs des coordonnées du point (20) dans les trois dimensions (x, y et z) de l'espace (2) de représentation initial. Sa sortie est envoyée sur un multiplieur (62) de la première rangée permettant de multiplier l'entrée sélectionnée, grâce aux commandes (59) de multiplexage, par les signaux représentatifs du pas d'échantillonnage (S). La sortie de chacun des trois premiers multiplexeurs de la première rangée est envoyée sur un soustracteur (61) respectif permettant de soustraire l'entrée sélectionnée grâce aux commandes (59) de multiplexage, par les signaux représentatifs des coordonnées du point (20), chacun respectivement dans une dimension de l'espace (2) de représentation initial (x pour le premier, y pour le deuxième et z pour le troisième). La sortie de ces trois soustracteurs (61) est envoyée vers une deuxième rangée de trois multiplexeurs (60). Les quatre entrées des deux premiers multiplexeurs de la deuxième rangée reçoivent la sortie des deux premiers soustracteurs (61) de la première rangée, la valeur 1 et la valeur des signaux représentatifs des coordonnées du point (20) dans les deux dimensions de l'espace (2) initial utilisées dans le multiplexeur adjacent de la rangée supérieure (soit x et z pour le premier, soit y et z pour le deuxième). La sortie de ces deux multiplexeurs à quatre entrées est envoyée vers un multiplieur (62) dont la sortie est envoyée vers un registre (71) de stockage. Le troisième multiplexeur (60) de la deuxième rangée possède trois entrées recevant la sortie du troisième soustracteur (61) de la première rangée, la valeur 1 et la valeur des signaux représentatifs des coordonnées du point (20) dans une seule dimension (z) de l'espace (2) initial. La sortie de ce troisième multiplexeur (60) de la deuxième rangée est envoyée vers un multiplexeur (60) d'une troisième rangée, qui possède deux entrées et reçoit sur son autre entrée, du multiplieur (62) de la première rangée, le signal représentant le produit de la sortie du quatrième multiplexeur de la première rangée, avec les signaux représentatifs du pas d'échantillonnage (S). La sortie de ce dernier multiplexeur (60) à deux entrées de la troisième rangée est envoyée vers un registre (72) de stockage. Chaque sortie des deux registres (71, 72) de stockage est envoyée à la fois vers un soustracteur (61) et un multiplieur (62), dont la sortie de chacun est envoyée vers un dernier multiplexeur (60), du bloc de calcul de coefficient d'interpolation, à deux entrées. La sortie de ce dernier multiplexeur du bloc est envoyée vers un registre (73) de stockage des coefficients (22) d'interpolation, calculés grâce aux opérations réalisées suite aux commandes (59) de multiplexage successives envoyées par l'automate (50) vers les multiplexeurs (60) de l'architecture décrite ci-dessus.

Cette architecture du bloc de calcul des coefficients d'interpolation permet donc, selon la méthode d'interpolation choisie, les calculs des coefficients (22) d'interpolation tels que définis dans le tableau fourni en annexe. Par exemple, dans le cas d'un interpolation tétraédrique d'un point (20) dont les coordonnées (x, y, z) sont comprises dans le tétraèdre de type 1 (tétraèdre 1 du tableau en annexe), les 4 coefficients à calculer sont S - x, x - y, y - z et z. Les commandes (59) de multiplexage successivement envoyées par l'automate (50) vers le bloc de calcul des coefficients permettront la sélection des différentes entrées des multiplexeurs (60) pour obtenir les coefficients successifs. Dans l'exemple choisi ici, les commandes (59) de multiplexage permettront dans un premier temps d'obtenir le coefficient S - x. Pour ce faire, les commandes (59) de multiplexage sélectionneront, sur le premier multiplexeur (60) de la première rangée, l'entrée recevant la valeur S du pas d'échantillonnage, de façon à ce que le premier soustracteur (61) puisse obtenir la valeur S - x. Les commandes (59) de multiplexage sélectionneront, sur le premier multiplexeur (60) de la deuxième rangée, l'entrée recevant cette valeur S - x du soustracteur (61). Les commandes (59) de multiplexage sélectionneront, sur le deuxième multiplexeur (60) de la deuxième rangée, l'entrée recevant la valeur 1 de façon à permettre la multiplication de la valeur S - x avec 1 par le multiplieur (62) et la conservation de la valeur S - x dans le registre (71) provisoire (quelque soit les commandes envoyées sur le multiplexeur de la rangée supérieure). Les commandes (59) de multiplexage sélectionneront, sur le troisième multiplexeur (60) de la deuxième rangée, l'entrée recevant la valeur 1 (quelque soit les commandes envoyées sur le multiplexeur de la rangée supérieure). Les commandes sélectionneront sur le multiplexeur de la troisième rangée, l'entrée recevant cette valeur 1 de façon à permettre le stockage de la valeur 1 dans le registre (72) provisoire. Le multiplieur (62) réalisera alors la multiplication de la valeur S - x avec 1, puis la sélection de cette valeur, par les commandes (59) de multiplexage sur le dernier multiplexeur (60) du bloc de calcul des coefficients permettra sa conservation dans le registre (73) de stockage des coefficients. Ensuite, les commandes (59) de multiplexage changeront selon la séquence de calcul des coefficients, par exemple, pour calculer le coefficient x - y. Ces commandes (59) sélectionneront, sur le deuxième multiplexeur de la première rangée, l'entrée x de façon à permettre sa soustraction par la valeur y par le soustracteur (61). De même que précédemment, la sélection de la valeur 1 sur les trois multiplexeurs de la deuxième rangée (quelque soit les commandes envoyées sur les autres multiplexeurs de la première rangée), grâce aux commandes (59) de multiplexage, permettra la conservation de cette valeur et sa multiplication avec la valeur 1 par le multiplieur (62) en sortie des registres (71, 72) provisoires. La sélection, sur le dernier multiplexeur du bloc, de l'entrée recevant le résultat de cette multiplication permettra le stockage de cette valeur x - y dans le registre (73). Ensuite, les commandes (59) de multiplexage permettront le calcul du coefficient y - z grâce à la sélection de l'entrée y sur le deuxième multiplexeur (60) de la deuxième rangée et de l'entrée 1 sur le premier multiplexeur (60) de la deuxième rangée (quelque soit les commandes envoyées sur les multiplexeurs de la rangée supérieure). Les commandes (59) sélectionneront, sur le troisième multiplexeur (60) de la deuxième rangée, l'entrée recevant la valeur z puis l'entrée recevant cette valeur sur le multiplexeur (60) de la troisième rangée (quelque soit les commandes envoyées sur les multiplexeurs de la première rangée). Ainsi le soustracteur (61) réalisera la soustraction y - z et les commandes (59) envoyées sur le dernier multiplexeur (60) du bloc de calcul des coefficients permettront la conservation de cette valeur y - z et son stockage dans le registre (73). Enfin, le dernier coefficient z sera calculé grâce à la sélection de l'entrée recevant la valeur z sur le troisième multiplexeur (60) de la deuxième rangée et la sélection de l'entrée recevant la valeur 1 sur les premier et deuxième multiplexeurs (60) de la deuxième rangée (quelque soit les commandes envoyées sur les multiplexeurs de la première rangée). Le registre (71) provisoire contient alors la valeur 1 et la sélection, sur le multiplexeur de la troisième rangée, de l'entrée recevant la valeur z du troisième multiplexeur de la deuxième rangée permettra le stockage de la valeur z dans le registre (72) provisoire. La multiplication de la valeur z par la valeur 1 par le multiplieur (62) et la sélection de l'entrée recevant le résultat de ce produit sur le dernier multiplexeur permettront le stockage de la valeur de ce quatrième coefficient d'interpolation z dans le registre (73) de stockage des coefficients. Ainsi, les commandes (59) de multiplexage envoyées successivement par l'automate (50) aux différents multiplexeurs (60) du bloc de calcul des coefficients (22) dans le circuit (10) d'interpolation ont permis le calcul des 4 coefficients d'interpolation nécessaires à l'interpolation tétraédrique de type 1 choisie d'après les valeurs choisies dans le registre (70) de configuration, en fonction des coordonnées du point à interpoler et du choix de la rapidité d'interpolation. Ensuite, le bloc de conversion d'espace de couleur du circuit (10) d'interpolation permettra la multiplication de chacun de ces coefficients avec les coordonnées, dans l'espace de représentation final, du sommet auquel il correspond dans le tétraèdre de type 1 choisi.

Le bloc de conversion d'espace de couleur du circuit (10) d'interpolation reçoit sur ses entrées, les différents coefficients (22) d'interpolation calculés et stockés dans le registre (73) de stockage des coefficients (22). Ce bloc de conversion d'espace de couleur reçoit également, sur les entrées de ses multiplexeurs, les signaux représentatifs des coordonnées, dans chacune des dimensions de l'espace (3) de représentation final, des sommets (31, figure 1) du polyèdre (35, figure 1) correspondant, d'après la table (4) de conversion stockée dans les moyens (40) de mémorisation du système (100), au polyèdre (25, figure 1) sélectionné dans l'espace (2) de représentation initial. Ce bloc de conversion d'espace de couleur est divisé en quatre colonnes identiques permettant le calcul, dans quatre dimensions, des signaux représentatifs des coordonnées des points (30) représentatifs de la composition chromatique du pixel (11) en cours de traitement, dans l'espacé (3) de représentation final. Pour chaque dimension de l'espace (3) de représentation final, les coordonnées de chaque sommet (31) du polyèdre (35), fournies par la table (4) de conversion correspondant à l'espace de représentation final désiré, sont multipliées, grâce à un multiplieur (62) au coefficient (22) d'interpolation correspondant à ce sommet (31) selon la méthode d'interpolation choisie (d'après la correspondance indiquée dans le tableau figurant en annexe). Le résultat de ces produits sont stockés provisoirement dans un registre (74, 75, 76, 77) de stockage de produits pour chacune des quatre dimensions de l'espace (3) de représentation. Ces produits sont ensuite additionnés les uns aux autres, par un additionneur (63) pour chacune des quatre dimensions de l'espace (3) de représentation, grâce au stockage de la somme provisoire dans un registre (78, 79, 80, 81) de stockage de somme, pour chacune des quatre dimensions de l'espace (3) de représentation final. La sortie de chacun de ces registres (78, 79, 80, 81) de stockage de somme est envoyée vers un multiplexeur (60) à deux entrées recevant la valeur 0 sur son autre entrée et envoyant sa sortie vers l'additionneur (63) précédent. Chacun de ces derniers multiplexeurs (60), permet, en fonction du nombre N de sommets (31) du polyèdre (35) dans l'espace (3) de représentation final, l'itération N fois de l'addition des produits successivement reçus du registre (74, 75, 76, 77) de stockage de produits, grâce aux commandes (59) de multiplexage envoyées par l'automate (50). Ces commandes (59) de multiplexage permettent la sélection, N fois, de l'entrée de ces multiplexeurs recevant la sortie des registres (78, 79, 80, 81) de stockage de somme, de façon à réaliser l'addition des N produits reçus de chacun des registres (74, 75, 76, 77) de stockage de produits. Le résultat de ces N itérations de l'addition des produits est stocké dans un registre (78, 79, 80, 81) de stockage de somme, pour chacune des quatre dimensions de l'espace (3) de représentation final et permet le calcul des coordonnées du point représentatif du pixel en cours de traitement. A la N+1^{ème} itération, les commandes (59) de multiplexage sélectionnent, sur ces derniers multiplexeurs (60), l'entrée recevant la valeur 0, de façon à recommencer l'addition de N nouveaux produits, reçus des registres (74, 75, 76, 77) de stockage de produits et correspondant au pixel suivant dans l'image. Chacun des résultats des N itérations des additions des produits, stockés dans les registres (78, 79, 80, 81) de stockage de somme, pour chacune des quatre dimensions de l'espace (3) de représentation final, est ensuite envoyé vers un diviseur (64) permettant la division de cette somme, soit par le pas d'échantillonnage (S) au cube lorsque le polyèdre (35) utilisé est un cube, soit par le pas d'échantillonnage (S) au carré lorsque le polyèdre (35) utilisé est un prisme ou une pyramide, soit par le pas d'échantillonnage (S) lorsque le polyèdre (35) utilisé est un tétraèdre. Le résultat de ces divisions pour chacune des quatre dimensions de l'espace (3) de représentation final aboutit aux coordonnées du point (30) représentatif de la composition chromatique du pixel (11) en cours de traitement, dans l'espace (3) de représentation final. On notera que lorsque l'espace (3) de représentation final ne possède que trois dimensions, une des entrées des multiplieurs (62) du bloc de conversion d'espace de couleur du circuit (10) d'interpolation recevra la valeur 0 et toute la colonne correspondante dans ce bloc véhiculera la valeur 0. Le traitement aboutira alors aux coordonnées point (30) représentatif de la composition chromatique du pixel (11) en cours de traitement, dans l'espace (3) de représentation final à trois dimensions.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

### Annexe

| **Type de polyèdre** | **Inégalité** | **C.I. du sommet** **x**_{**i**}, **y**_{**i**} **z**_{**i**} | **C.I. du sommet** **x**_{**i**}**+S,** **, y**_{**i**} **z**_{**i**} | **C.I. du sommet** **x**_{**i**}**,** **, y**_{**i**}**+S,** **z**_{**i**} | **C.I. du sommet** **x**_{**i**}**,** **y**_{**i**} **z**_{**i**}**+S** | **C.I. du sommet** **x**_{**i**}**+S,** **y**_{**i**}**+S,** **z**_{**i**} | **C.I. du sommet** **x**_{**i**}**+S,** **y**_{**i**} **z**_{**i**}**+S** | **C.I. du sommet** **x**_{**i**}**,** **y**_{**i**}**+S,** **z**_{**i**}**+S** | **C.I. du sommet** **x**_{**i**}**+S,** **y**_{**i**}**+S,** **z**_{**i**}**+S** |
|---|---|---|---|---|---|---|---|---|---|
| **Cube** | | (S - x)* (S - y)* (S - z) | (x)* (S - y)* (S - z) | (S - x)* (y)* (S - z) | (S - x)* (S - y)* (z) | (x)* (y)* (S - z) | (x)* (S - y)* (z) | (S - x)* (y)* (z) | x* y* z |
| **Tétraèdre 1** | x ≥ y ≥ z | (S - x) | x - y | | | y - z | | | z |
| **Tétraèdre 2** | x ≥ z > y | S - x | x - z | | | | z-y | | y |
| **Tétraèdre 3** | z > x ≥ y | S - z | | | z - x | | x-y | | y |
| **Tétraèdre 4** | y > x > z | S - y | | y - x | | x - z | | | z |
| **Tétraèdre 5** | y > z ≥ x | S - y | | y-z | | | | z - x | x |
| **Tétraèdre 6** | z ≥ y > x | S - z | | | z - y | | | y - x | x |
| **Prisme 1** | x > y | (S - x)* (S - y) | (x - y)* (S - z) | | z* (S - x) | y * (S - z) | z* (x-y) | | y*X |
| **Prisme 2** | x < y | (S - y)* (S - z) | | (y - x)* (S - z) | z* (S - y) | x* (S - z) | | z* (y - x) | x*y |
| **Pyramide 1** | y > x z > x | (S - y)* (S - z) | | y* (S - z) | z* (S - y) | | | (y* z)- S*x | S*x |
| **Pyramide 2** | x > y z > y | (S - x)* (S - z) | X* (S - z) | | | | x*z- S*y | z* (S - x) | S*y |
| **Pyramide 3** | x > z y > z | (S - x)* (S - y) | x* (S - y) | y* (S - x) | | x*y- z*S | | | z*S |

S = « Step » = Le pas d'échantillonnage des coordonnées C.I. = « Coefficient d'Interpolation »
x, y et z = Coordonnées, dans les différentes dimensions de l'espace de représentation initial, du point (20) représentatif de la composition chromatique et/ou de luminance du pixel (11) en cours de traitement (le point à interpoler)
xᵢ, yᵢ et zᵢ = Coordonnées, dans les différentes dimensions de l'espace de représentation initial, du point (21) d'origine du cube dans lequel sont comprises les coordonnées du point (20) représentatif de la composition chromatique et/ou de luminance du pixel (11) en cours de traitement (xᵢ, yᵢ et zᵢ correspondent aux bits de poids fort parmi les coordonnées x, y, z du point à interpoler).

## Revendications

1. Procédé de conversion d'espace de couleur, par interpolation des coordonnées de chacun des points représentatifs de la composition chromatique des pixels d'une image, depuis un espace (2) pluridimensionnel de représentation initial vers au moins un autre espace (3) pluridimensionnel de représentation, dit final, dont au moins certaines dimensions correspondent à des composantes chromatiques, **caractérisé**, d'une part, en ce qu'il est mis en oeuvre par un circuit (10) électronique d'interpolation implémenté dans un système (100) de traitement d'image et, d'autre part, en ce qu'il comporte une étape de saisie de choix, par un utilisateur, grâce à des moyens (15) de saisie du système (100) de traitement d'image, d'au moins un critère favori parmi au moins des critères de rapidité et de qualité de la conversion d'espace de couleur, cette étape de choix résultant en la sélection (52) d'une méthode d'interpolation tridimensionnelle, parmi au moins trois méthodes, réalisables par le circuit (10) électronique, consistant toutes en un calcul de coefficients (22) d'interpolation polyédrique permettant de déterminer les coordonnées des points (20) représentatifs de la composition chromatique des pixels (11) d'une image (1), d'après les coordonnées de sommets (21) de polyèdres (25) dans lesquels ces coordonnées des points sont comprises, la différence entre ces méthodes consistant en la nature des polyèdres utilisés.

2. Procédé selon la revendication 1, **caractérisé en ce que** les méthodes d'interpolation polyédrique réalisables par le circuit (10) électronique sont au nombre de quatre et diffèrent par la nature des polyèdres (25) utilisés, parmi soit des cubes, soit des tétraèdres, soit des prismes, soit des pyramides.

3. Procédé selon une des revendications 1 et 2, **caractérisé en ce que** l'étape de saisie, par l'utilisateur, du choix du critère favori se traduit, dans le système (100) de traitement d'image, par une sélection d'une valeur parmi quatre valeurs stockées dans un registre (70) de configuration, chaque valeur correspondant à un type d'interpolation polyédrique, la sélection (52) de l'une de ces valeurs permettant à un automate (50) du système (100) de traitement d'image d'envoyer des commandes (59) de multiplexage vers des multiplexeurs (60) du circuit (10) électronique d'interpolation tridimensionnelle, ces commandes (59) de multiplexage permettant au circuit (10) électronique de réaliser le calcul, selon la méthode d'interpolation polyédrique sélectionnée, des coefficients (22) d'interpolation et des coordonnées du point (30) représentatif, dans l'espace (3) de représentation final, de la composition chromatique et/ou de luminance des pixels (11) de l'image (1).

4. Procédé selon une des revendications 1 à 3, **caractérisé en ce qu'**il comporte également une étape de choix par l'utilisateur, grâce à des moyens (15) de saisie du système (100) de traitement d'image, d'au moins un espace (3) de représentation final parmi une pluralité d'espaces de représentation, grâce à une pluralité de tables (4) de conversion stockées dans des moyens (40) de mémorisation du système (100) de traitement d'image, la consultation de chacune de ces tables (4) permettant la détermination des coordonnées des sommets (31) du polyèdre (35) dans lequel se trouve le point (30) représentatif de la composition chromatique d'un pixel (11) donné de l'image (1), dans chacune des dimensions de l'espace (3) de représentation final, à partir des coordonnées des sommets (21) de ce polyèdre (25) dans chacune des dimensions de l'espace (2) de représentation initial, selon un pas d'échantillonnage (S) des coordonnées dans les espaces initial et final, correspondant au pas d'entrée de ces tables (4), cette étape de choix permettant donc l'utilisation, par les moyens de calcul du système (100) de traitement d'image, du pas d'échantillonnage (S) et des coordonnées des sommets (21) des polyèdres, pour le calcul des coefficients (22) d'interpolation et des coordonnées du point représentatif du pixel (11) dans l'espace (3) de représentation final.

5. Procédé selon une des revendications 1 à 4, **caractérisé en ce que** l'étape de consultation (555) d'une des tables (4) de conversion est précédée des étapes successives suivantes, réalisées par le système (100) de traitement d'image, pour chacun des pixels de l'image (1):
- détermination (53), en fonction de la méthode de calcul d'interpolation tridimensionnelle choisie suite à l'étape de choix du critère favori par l'utilisateur, du polyèdre (25) dans lequel se trouve le point (20) représentatif de la composition chromatique d'un pixel (11) de l'image (1), dans l'espace (2) de représentation initial, par sélection d'un certain nombre de bits de poids fort parmi les signaux représentatifs des coordonnées de ce point, en fonction du pas d'échantillonnage (S) qui correspond au pas d'entrée de la table (4) de conversion, puis, lorsque le polyèdre (25) n'est pas un cube, par comparaison des valeurs des bits de poids faible parmi ces signaux, entre les différentes dimensions de l'espace (2) de représentation initial, grâce à un comparateur (90) implémenté dans le système (100) de traitement d'image;
- détermination (54) des coordonnées des sommets (21) du polyèdre (25) dans lequel se trouvent les coordonnées du point (20) représentatif de la composition chromatique de ce pixel (11) de l'image (1), dans chacune des dimensions de l'espace (2) de représentation initial ;
- calcul (550), grâce au circuit (10) électronique d'interpolation polyédrique, des coefficients (22) d'interpolation à multiplier, chacun aux coordonnées de l'un des sommets (21) de ce polyèdre (25), dans chacune des dimensions de l'espace (2) de représentation initial, pour déterminer les coordonnées du point (20) représentatif de la composition chromatique de ce pixel (11) de l'image (1), par sommation de ces produits, puis par division de cette somme, soit par le pas d'échantillonnage (S) au cube lorsque le polyèdre (25) utilisé est un cube, soit par le pas d'échantillonnage (S) au carré lorsque le polyèdre (25) utilisé est un prisme ou une pyramide, soit par le pas d'échantillonnage (S) lorsque le polyèdre (25) utilisé est un tétraèdre.

6. Procédé selon une des revendications 1 à 5, **caractérisé en ce que** l'étape de consultation (555) d'une des tables (4) de conversion résulte en la détermination (56) des coordonnées, dans chacune des dimensions de l'espace (3) de représentation final, des sommets (31) du polyèdre (35) correspondant aux coordonnées des sommets (21) du polyèdre (25) dans lequel sont comprises les coordonnées du point (20) représentatif de la composition chromatique d'un pixel (11) de l'image (1) dans l'espace (2) de représentation initial, cette détermination (56) permettant ensuite le calcul des coordonnées du point (30) représentatif de la composition chromatique du pixel (11) dans l'espace (3) de représentation final.

7. Procédé selon une des revendications 1 à 6, **caractérisé en ce que** l'étape (53) de détermination du polyèdre (25) dans lequel se trouvent les coordonnées du point (20) représentatif de la composition chromatique d'un pixel (11) de l'image (1), réalisée en fonction de la méthode de calcul d'interpolation tridimensionnelle choisie, lorsque le polyèdre (25) n'est pas un cube, par comparaison des valeurs des bits de poids faible parmi ces signaux, dans chacune des dimensions de l'espace (2) de représentation initial, permet de définir dans quel polyèdre (25) sont comprises les coordonnées de ce point (20), parmi la pluralité de polyèdres (25) possibles pour un même type d'interpolation polyédrique donné et, par conséquent, de définir les commandes (59) de multiplexage à envoyer par l'automate (50) vers les multiplexeurs (60) du circuit (10) électronique d'interpolation, pour calculer les coefficients (22) d'interpolation et les coordonnées du point (30) représentatif du pixel (11) en cours de traitement, dans l'espace (3) de représentation final.

8. Circuit (10) électronique d'interpolation polyédrique permettant une conversion d'espace de couleur, **caractérisé en ce qu'**il comporte des multiplexeurs (60), dont les commandes (59) de multiplexage sont déterminées en fonction de signaux provenant d'un automate (50) commandé par un registre (70) de configuration, l'agencement de ces multiplexeurs (60) permettant, en fonction des commandes (59) de multiplexage envoyée par l'automate (50), l'exécution, grâce à des calculs de coefficients (22) d'interpolation, d'au moins une méthode de calcul d'interpolation polyédrique choisie parmi trois méthodes différentes réalisables par le circuit (10) électronique configurable de façon évolutive par l'automate (50).

9. Circuit (10) électronique d'interpolation selon la revendication 8, **caractérisé en ce qu'**il comporte des entrées recevant, du système (100) de traitement d'image, des signaux représentatifs de coordonnées de points (20) représentatifs de compositions chromatiques de pixels (11) d'une image (1), les calculs réalisés par le circuit (10) sur ces entrées permettant, en fonction des commandes (59) de multiplexage, une conversion d'espace de couleur, grâce à l'élaboration de signaux représentatifs de coordonnées de points (30) représentatifs de compositions chromatiques de pixels (11) d'une image (1), dans un espace (3) pluridimensionnel de représentation final, à partir des signaux représentatifs des coordonnées de ces points (20) dans un espace (2) pluridimensionnel de représentation initial et des signaux représentatifs des coefficients (22) d'interpolation calculés.

10. Circuit (10) électronique d'interpolation selon une des revendications 8 et 9, **caractérisé en ce que** son architecture permet la conversion des coordonnées d'un point (20) représentatif de la composition chromatique d'un pixel (11) donné d'une image (1), depuis un espace (2) tridimensionnel de représentation initial vers un espace (3) quadridimensionnel de représentation final, selon une parmi quatre méthodes d'interpolation polyédrique différant par la nature des polyèdres (25) utilisés, parmi soit des cubes, soit des prismes, soit des pyramides, soit des tétraèdres, les coordonnées des sommets (21) de ces polyèdres (25) étant déterminées selon un pas d'échantillonnage (S) des coordonnées du point (20) représentatif de la composition chromatique du pixel (11) de l'image (1), ce pas d'échantillonnage (S) correspondant au pas d'entrée d'au moins une table (4) de conversion des coordonnées de sommets (21) de polyèdres (25) dans un espace (2) de représentation initial en coordonnées de sommets (31) de polyèdres (35) dans un espace (3) de représentation final.

11. Circuit (10) électronique d'interpolation selon une des revendications 8 à 10, **caractérisé en ce qu'**il comporte un premier bloc, dit de calcul de coefficients d'interpolation, composé de soustracteurs (61), de multiplieurs (62), de registres (71, 72, 73) et de multiplexeurs (60), ces multiplexeurs (60) recevant des commandes (59) de multiplexage de l'automate (50) associé au circuit (10) d'interpolation, qui contrôle ainsi la séquence des opérations et des calculs réalisés pour déterminer les coefficients (22) d'interpolation des sommets (21) successivement en cours de traitement.

12. Circuit (10) électronique d'interpolation selon une des revendications 8 à 11, **caractérisé en ce que** les commandes (59) de multiplexage, envoyées aux multiplexeurs (60) par l'automate (50), permettent de calculer les coefficients (22) d'interpolation par soustraction et/ou multiplication entre eux des signaux représentatifs des coordonnées (x, y, z) du point (20) représentatif de la composition chromatique du pixel (11) en cours de traitement dans les dimensions de l'espace (2) de représentation initial nécessaires à la méthode d'interpolation sélectionnée et/ou des signaux représentatifs du pas d'échantillonnage (S) de ces coordonnées, les coefficients (22) d'interpolation ainsi calculés étant ensuite stockés dans un registre (73) de stockage des coefficients d'interpolation du circuit (10) d'interpolation.

13. Circuit (10) électronique d'interpolation selon une des revendications 8 à 12, **caractérisé en ce qu'**il comporte un second bloc, dit de conversion d'espace de couleur, composé, de multiplieurs (62), d'additionneurs (63), de diviseurs (64), de registres (74, 75, 76, 77, 78, 79, 80, 81) et de multiplexeurs (60), ce bloc recevant en entrée, d'une part, les coefficients (22) d'interpolation stockés dans le registre (73) de stockage des coefficients (22) d'interpolation du circuit (10) d'interpolation et, d'autre part, les signaux représentatifs, dans l'espace (3) de représentation final, des coordonnées des sommets (31) du polyèdre (35) correspondant, d'après la table (4) de conversion, au polyèdre (25) dans lequel sont comprises, dans l'espace (2) de représentation initial, les coordonnées du point (20) représentatif de la composition chromatique du pixel (11) en cours de traitement.

14. Circuit (10) électronique d'interpolation selon une des revendications 8 à 13, **caractérisé en ce que** les commandes (59) de multiplexage, envoyées aux multiplexeurs (60) par l'automate (50), permettent de calculer, dans chacune des dimensions de l'espace (3) de représentation final, les coordonnées du point (30) représentatif de la composition chromatique du pixel (11) en cours de traitement, par calcul de la somme des produits de chacun des coefficients (22) d'interpolation avec les coordonnées de l'un des sommets (31) du polyèdre (35) correspondant, d'après la table (4) de conversion, dans l'espace (3) de représentation final, au polyèdre (35) sélectionné dans l'espace (2) de représentation initial, puis par division de cette somme, soit par le pas d'échantillonnage (S) au cube lorsque le polyèdre (25) utilisé est un cube, soit par le pas d'échantillonnage (S) au carré lorsque le polyèdre (25) utilisé est un prisme ou une pyramide, soit par le pas d'échantillonnage (S) lorsque le polyèdre (25) utilisé est un tétraèdre.

15. Système (100) de traitement d'image permettant la conversion d'espace de couleur selon différentes méthodes de calcul d'interpolation polyédrique, comportant des moyens de calcul et des moyens d'acquisition de signaux représentatifs d'une image, **caractérisé**, d'une part, en ce qu'il comporte un circuit (10) électronique d'interpolation comportant des multiplexeurs (60) commandés par un automate (50), dont les commandes (59) de multiplexage sont déterminées, en fonction de signaux provenant d'un registre (70) de configuration du système (100) de traitement d'image, pour permettre la réalisation d'au moins trois méthodes de calcul d'interpolation polyédrique par des calculs de coefficients (22) d'interpolation et, d'autre part, en ce qu'il comporte des moyens (40) de mémorisation dans lesquels est stockée au moins une table (4) de conversion mettant en correspondance des coordonnées de sommets (21) de polyèdres (5), dans un espace (2) pluridimensionnel initial de représentation de la composition chromatique des pixels (11) d'une image (1), avec des coordonnées de sommets (31) de polyèdres (35), dans un espace (3)pluridimensionnel final de représentation de la composition chromatique des pixels (11) d'une image (1), selon un pas d'échantillonnage (S) des coordonnées qui correspond au pas d'entrée dans la table (4) et qui est utilisé pour la détermination des coordonnées des sommets (21) des polyèdres (25) et pour le calcul des coefficients (22) d'interpolation.

16. Système (100) selon la revendication 15, **caractérisé en ce qu'**il comporte des moyens (15) de saisie permettant à l'utilisateur de saisir un choix d'un critère favori parmi au moins des critères de qualité et de rapidité, la sélection (52) de ce critère favori résultant en la sélection d'une valeur des signaux du registre (70) de configuration du système (100) déterminant les commandes (59) de multiplexage envoyées par l'automate (50) vers les multiplexeurs (60) du circuit (10) électronique d'interpolation polyédrique, ce choix déterminant la nature des polyèdres (25) utilisés dans le calcul d'interpolation polyédrique, les moyens de calcul du système (100) de traitement d'image permettant la détermination des coordonnées des sommets (21) du polyèdre (25) dans lequel sont comprises les coordonnées du point (20) représentatif de la composition chromatique d'un pixel (11) donné de l'image, dans l'espace (2) pluridimensionnel de représentation initial.

17. Système (100) selon une des revendications 15 et 16, **caractérisé en ce que** les moyens (15) de saisie permettent également la saisie d'un choix d'un espace (3) pluridimensionnel de représentation final de la composition chromatique des pixels (11) de l'image (1), cette saisie permettant le choix de l'utilisation de l'une des tables (4) de conversion d'espace de couleur stockées dans les moyens (40) de mémorisation du système (100) de traitement d'image.

18. Système (100) selon une des revendications 15 à 17, **caractérisé en ce que** les moyens (40) de mémorisation permettent le stockage de signaux représentatifs de la composition chromatique des pixels de l'image (1), dans un espace (2) pluridimensionnel de représentation, ces signaux étant acquis grâce aux moyens d'acquisition de signaux représentatifs d'une image et utilisés en entrée du circuit (10) intégré d'interpolation polyédrique et en entrée de la table (4) de conversion d'espace de couleur choisie, pour permettre le calcul de coordonnées de points (20, 30) représentatifs de la composition chromatique d'un pixel (11) donné de l'image (1) par sommation du produit des coefficients (22) d'interpolation, chacun avec les coordonnées de l'un des sommets (21, 31) du polyèdre (31, 35) , dans un espace (2) pluridimensionnel de représentation initial, puis dans un espace (3) pluridimensionnel de représentation final.
